# EUROPEAN PATENT APPLICATION

(11) **EP 4 708 096 A1**
(43) Date of publication of application: **11.03.2026**
(21) Application number: 23941663.9
(22) Date of filing: 18.08.2023
(51) Int. Cl.: G06F 21/57

(54) **SYSTEM, METHOD, AND PROGRAM FOR INSPECTING VULNERABILITY OF WEBSITE**

(30) Priority: 12.06.2023 JP 2023096021
(71) Applicant: AEYE SECURITY LAB INC., Tokyo 101-0054 (JP)
(72) Inventor: ASAI, Ken, Tokyo 101-0054 (JP); SUGIYAMA, Toshiharu, Tokyo 101-0054 (JP); ANZAI, Masato, Tokyo 101-0054 (JP)
(74) Representative: Viering, Jentschura & Partner mbB Patent- und Rechtsanwälte
(86) International application number: PCT/JP2023/029802
(87) International publication number: WO 2024/257364

(57) **Abstract**

A vulnerability inspection server 10 according to an embodiment of the present invention suppresses missing of important functions in a vulnerability inspection of a website. The server 10 provides, to a user who operates a user terminal 30 communicatively connected to the server 10 through a communication network 20, a vulnerability inspection service in which a website 22 or the like specified by the user is inspected for vulnerabilities (flaws in terms of information security). During the crawling of the website 22, the server 10 determines an inspection-requiring function that requires an inspection for vulnerabilities on a webpage, determines the degrees of relatedness between respective multiple operations executable on the webpage and the inspection-requiring function, and executes an operation identified on the basis of the degrees of relatedness from among the executable operations. That is, the server 10 is able to execute the operation identified on the basis of the degrees of relatedness to the inspection-requiring function. This facilitates crawling of webpages corresponding to important functions.

## Description

### TECHNICAL FIELD

The present invention relates to a system, method, and program for a vulnerability inspection of a website involving crawling of the website.

### BACKGROUND ART

Various services for inspecting a website for vulnerabilities have been provided (e.g., see Patent Literature1 1 below). Such a service may involve crawling of a website, which typically involves repeating extraction of links, forms, and the like from the HTML data of webpages and sequential access to them.

### Citation List

### Patent Literature

[Patent Literature 1] Japanese Unexamined Patent Application Publication No. 2012-133406

### SUMMARY OF THE INVENTION

### Problem to be Solved by the Invention

However, when upper limits are set on the number of webpages to be accessed, the number of layers, the elapsed time, and the like when crawling a website as described above, the crawling may stop before all the pages of the website are crawled. As a result, some of the multiple functions of the website may be missed in a vulnerability inspection. For example, functions to be inspected primarily, such as the product purchase function of an e-commerce site, may be missed in the crawling. Therefore, it is desirable to prevent such missing.

An object of embodiments of the present invention is to suppress missing of important functions in a vulnerability inspection of a website. Other objects of the embodiments of the present invention will become apparent upon reference to the entire description.

### Means for Solving the Problems

A system according to an embodiment of the present invention is a system for a vulnerability inspection of a website, the vulnerability inspection involving crawling of the website, the system including one or more computer processors. The one or more computer processors perform actions including acquiring a first webpage included in the website, determining an inspection-requiring function that requires an inspection for vulnerabilities, on the basis of first page information on the first webpage, identifying a plurality of operations executable on the first webpage, determining degrees of relatedness between the respective executable operations and the inspection-requiring function, executing a first operation identified on the basis of the degrees of relatedness from among the executable operations, and acquiring a second webpage in response to execution of the first operation.

A method according to an embodiment of the present invention is a method for a vulnerability inspection of a website, the vulnerability inspection involving crawling of the website. The method includes acquiring a first webpage included in the website, determining an inspection-requiring function that requires an inspection for vulnerabilities, on the basis of first page information on the first webpage, identifying a plurality of operations executable on the first webpage, determining degrees of relatedness between the respective executable operations and the inspection-requiring function, executing a first operation identified on the basis of the degrees of relatedness from among the executable operations, and acquiring a second webpage in response to execution of the first operation.

A program according to an embodiment of the present invention is a program for a vulnerability inspection of a website, the vulnerability inspection involving crawling of the website. The program causes one or more computers to perform actions including acquiring a first webpage included in the website, determining an inspection-requiring function that requires an inspection for vulnerabilities, on the basis of first page information on the first webpage, identifying a plurality of operations executable on the first webpage, determining degrees of relatedness between the respective executable operations and the inspection-requiring function, executing a first operation identified on the basis of the degrees of relatedness from among the executable operations, and acquiring a second webpage in response to execution of the first operation.

### Advantageous Effects of the Invention

The various embodiments of the present invention suppress missing of important functions in a vulnerability inspection of a website.

### BRIEF DESCRIPTION OF THE DRAWINGS

FIG. 1 is a schematic diagram showing the configuration of a network including a vulnerability inspection server 10 according to an embodiment of the present invention.
FIG. 2 is a diagram illustrating information managed by an inspection management table 152.
FIG. 3 is a diagram illustrating information managed by a page management table 154.
FIG. 4 is a diagram illustrating information managed by an operation management table 156.
FIG. 5 is a flowchart illustrating a process that the vulnerability inspection server 10 performs when inspecting a website for vulnerabilities.
FIG. 6 is a diagram illustrating a target site setting screen 50.
FIG. 7 is a flowchart illustrating a process that the vulnerability inspection server 10 performs when crawling a website.
FIG. 8 is a diagram showing an example of input information inputted to a large language model configured to acquire function relatedness degree scores and output information outputted therefrom.
FIG. 9 is a diagram showing an example of contents registered in the operation management table 156.
FIG. 10 is a diagram showing an example of input information inputted to a large language model configured to acquire function relatedness degree scores and output information outputted therefrom.
FIG. 11 is a diagram showing an example of contents registered in the operation management table 156.
FIG. 12 is a diagram illustrating an inspection result confirmation screen 60.
FIG. 13 is a diagram showing an example of input information inputted to a large language model configured to set target functions (inspection-requiring functions) and output information outputted therefrom.
FIG. 14 is a diagram showing another example of input information inputted to a large language model configured to acquire function relatedness degree scores and output information outputted therefrom.

### DESCRIPTION OF EMBODIMENTS

Now, an embodiment of the present invention will be described with reference to the drawings. In the drawings, the same or similar components may be given the same reference signs.

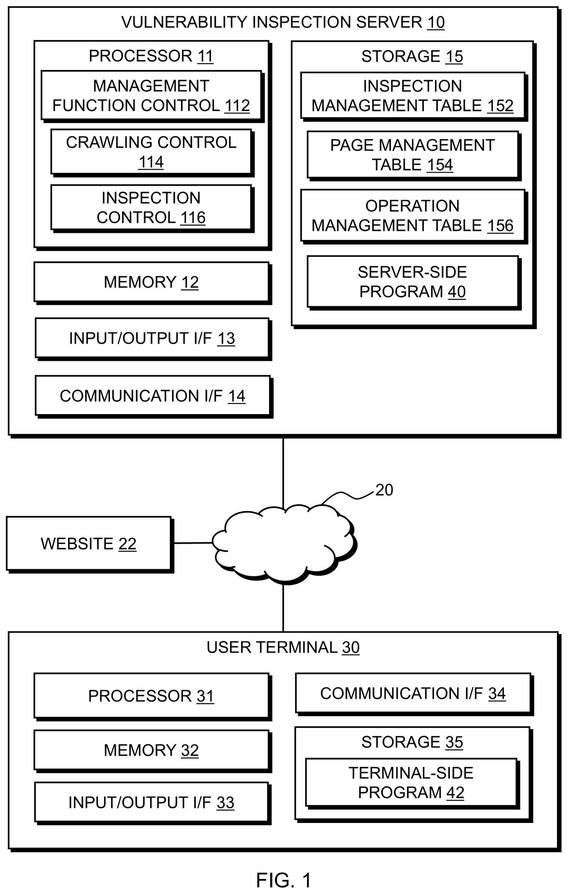

FIG. 1 is a schematic diagram showing the configuration of a network including a vulnerability inspection server 10 according to an embodiment of the present invention. As shown, the server 10 is communicatively connected to a user terminal 30 through a communication network 20 such as the Internet. Although only one user terminal 30 is shown in FIG. 1, the server 10 is communicatively connected to multiple user terminals 30. The vulnerability inspection server 10 provides, to a user who operates the user terminals 30, a vulnerability inspection service in which a website 22 or the like specified by the user is inspected for vulnerabilities (flaws in terms of information security). The vulnerability inspection server 10 is an example of an apparatus that implements all or part of the system of the present invention.

First, the hardware configuration of the vulnerability inspection server 10 will be described. The vulnerability inspection server 10 consists of a general-purpose computer. As shown in FIG. 1, it includes a computer processor 11, main memory 12, an input/output I/F 13, a communication I/F 14, and storage 15. These components are electrically connected through a bus or the like (not shown) .

The computer processor 11 consists of a CPU, GPU, or the like. It loads various programs stored in the storage 15 and the like into the main memory 12 and executes various commands included in the programs. The main memory 12 consists of, for example, DRAM or the like.

The input/output I/F 13 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 13 also includes an image output device such as a display and a sound output device such as a speaker.

The communication I/F 14 is implemented as hardware such as a network adapter, any type of communication software, or a combination of these and is configured to perform wired or wireless communication through the communication network 20 or the like.

The storage 15 consists of, for example, a magnetic disk, flash memory, or the like. The storage 15 is storing various programs including an operating system, various types of data, and the like. For example, as shown in FIG. 1, the storage 15 includes an inspection management table 152 that manages information on vulnerability inspections, a page management table 154 that manages page information on webpages included in the website 22 to be inspected, and an operation management table 156 that manages information on operations executed in each webpage. These tables may be partially integrated into a single table or divided into multiple tables.

The storage 15 is also storing, for example, a server-side program 40 according to an embodiment of the present invention. The program 40 is a program for causing the server 10 to function as all or part of the system for providing vulnerability inspection services. The server-side program 40 may be configured such that at least part thereof is executed on the user terminal 30 through a terminal-side program 42 (to be discussed later).

In the present embodiment, the vulnerability inspection server 10 may consist of multiple computers each having the above hardware configuration. For example, the server 10 may consist of multiple server devices.

The vulnerability inspection server 10 thus configured can function as a web server and application server, that is, can perform various processes in response to a request from the user terminal 30 and send screen data (e.g., HTML data), control data, and the like corresponding to the results of the processes to the user terminal 30. The user terminal 30 can output thereon webpages or other screens on the basis of the received data.

Next, the hardware configuration of the user terminal 30 will be described. The user terminal 30 consists of a general-purpose computer. As shown in FIG. 1, it includes a computer processor 31, main memory 32, an input/output I/F 33, a communication I/F 34, and storage 35. These components are electrically connected through a bus or the like (not shown).

The computer processor 31 consists of a CPU, GPU, or the like. It loads various programs stored in the storage 35 and the like into the main memory 32 and executes various commands included in the programs. The main memory 32 consists of, for example, DRAM or the like.

The input/output I/F 33 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 33 also includes an image output device such as a display and a sound output device such as a speaker.

The communication I/F 34 is implemented as hardware such as a network adapter, any type of communication software, or a combination of these and is configured to perform wired or wireless communication through the communication network 20 or the like.

The storage 35 consists of, for example, a magnetic disk, flash memory, or the like. The storage 35 is storing various programs including an operating system, various types of data, and the like. The programs stored in the storage 35 can be downloaded and installed from an application market or the like. The storage 35 is also storing the above-mentioned terminal-side program 42. The program 42 consists of a web browser or any other application (e.g., a terminal-side application for vulnerability inspection services according to the present embodiment, etc.) and may be configured to execute at least a part of the server-side program 40, as described above.

In the present embodiment, the user terminal 30 may consist of a smartphone, tablet terminal, personal computer, or the like.

The user who operates the user terminal 30 thus configured is able to use a vulnerability inspection service provided by the server 10 by communicating with the server 10 through the terminal-side program 42 installed in the storage 35 or the like.

Next, the functions of the vulnerability inspection server 10 configured as described above will be described. As shown in FIG. 1, the computer processor 11 of the server 10 is configured to function as a management function control unit 112, a crawling control unit 114, and an inspection control unit 116 by executing commands included in a program (e.g., at least a part of the server-side program 40) loaded into the main memory 12.

The management function control unit 112 is configured to perform various processes related to the control of vulnerability inspection service management functions. For example, the management function control unit 112 sends screen data, control data, and the like on various screens related to the management functions to the user terminal 30, performs various processes in response to inputs made by the user through the screens outputted on the user terminal 30, and sends the screen data, control data, and the like corresponding to the results of the processes to the user terminal 30. Examples of the management functions controlled by the management function control unit 112 include login processing (user authentication), billing control, user account management, and the like.

The crawling control unit 114 is configured to perform various processes related to the control of crawling of the website 22. For example, the crawling control unit 114 crawls the website 22 by acquiring a webpage included in the website 22, executing operations executable on the webpage (e.g., clicks of transition target elements (including various types of objects, such as buttons, images, text, or the like, on which links, scripts, or the like are set) to acquire destination webpages, and repeating these processes.

In the present embodiment, the crawling control unit 114 is configured to determine an inspection-requiring function that requires an inspection for vulnerabilities, on the basis of page information on each webpage. For example, the crawling control unit 114 determines an inspection-requiring function on the basis of the HTML data of each webpage.

The crawling control unit 114 is also configured to identify multiple operations executable on each webpage and to determine the degrees of relatedness between the respective executable operations and the inspection-requiring function. For example, the crawling control unit 114 identifies operations executable on each webpage among predetermined multiple operations on the basis of the HTML data or the like of the webpage. Examples of the predetermined operations include operations such as "clicking a link to a product," "clicking a login link," and "making inputs in a login form and sending them."

In the present embodiment, an operation to be executed on each webpage is identified on the basis of the degrees of relatedness between the respective executable operations and the inspection-requiring function. That is, the crawling control unit 114 is configured to execute an operation identified on the basis of the degrees of relatedness from among the multiple executable operations and to acquire the destination webpage of a transition in response to the execution of the operation. For example, the crawling control unit 114 preferentially executes an operation having a higher degree of relatedness to the inspection-requiring function among the multiple executable operations.

The inspection control unit 116 is configured to perform various processes related to the control of a vulnerability inspection of the website 22. For example, during the crawling of the website 22, the inspection control unit 116 sends various requests to inspect the website 22 for predetermined inspection items and makes determinations with respect to the corresponding inspection items on the basis of the contents of responses received from the website 22.

As seen above, the vulnerability inspection server 10 according to the present embodiment, during the crawling of the website 22, determines an inspection-requiring function that requires an inspection for vulnerabilities, determines the degrees of relatedness between respective multiple operations executable on each webpage and the inspection-requiring function, and executes an operation identified from among the multiple executable operations on the basis of the degrees of relatedness. Thus, the vulnerability inspection server 10 is able to execute the operation identified on the basis of the degrees of relatedness to the inspection-requiring function. This facilitates crawling of webpages corresponding to important functions. In other words, the vulnerability inspection server 10 suppresses missing of important functions in a vulnerability inspection of a website.

In the present embodiment, an inspection-requiring function may be determined using various methods. For example, a rule-based approach may be used. In this case, an inspection-requiring function may be determined on the basis of, for example, label names in each webpage (for example, when label names such as "login(in Japanese)," "login(in English)," "password," and "account" are included in the corresponding HTML data, "login" may be determined as an inspection-requiring function).

An inspection-requiring function may also be determined using a trained model generated by machine learning. For example, the crawling control unit 114 may be configured to input input information including page information into a trained model for determining an inspection-requiring function and to determine an inspection-requiring function on the basis of output information that is outputted from the trained model and used to identify the inspection-requiring function. The crawling control unit 114 thus configured is able to determine an inspection-requiring function using the trained model.

In the present embodiment, the trained model for determining an inspection-requiring function may be configured to output various types of information. For example, the trained model may be configured to output information identifying an inspection-requiring function. More specifically, for example, the trained model may consist of a large language model (LLM) configured to, when receiving HTML data of each webpage, as well as information instructing the large language model to select an inspection-requiring function from predetermined multiple functions, output information on the selected inspection-requiring function. By using the trained model thus configured, the crawling control unit 114 is able to determine an inspection-requiring function on the basis of information identifying the inspection-requiring function outputted from the trained model.

Such a trained model may be configured to output inspection-requiring possibility information indicating the possibilities that predetermined multiple functions each require an inspection for vulnerabilities and, more specifically, may be generated through machine learning using a large amount of training data (e.g., page information (HTML data, etc.) on webpages included in a website, information identifying inspection-requiring functions in the website, etc.) and configured to output scores or the like indicating the possibilities that the predetermined functions each require an inspection, as inspection-requiring possibility information. In this case, the crawling control unit 114 preferentially determines a function having a high possibility that it requires an inspection for vulnerabilities, as an inspection-requiring function on the basis of inspection-requiring possibility information outputted from the trained model. The crawling control unit 114 thus configured is able to determine an inspection-requiring function on the basis of inspection-requiring possibility information outputted from the trained model.

The crawling control unit 114 may also be configured to re-determine an inspection-requiring function on the basis of page information on the transition source webpage, as well as page information on the destination webpage. For example, the crawling control unit 114 may determine a first function as an inspection-requiring function on the basis of first page information on a first webpage and then determines a second function as an inspection-requiring function in addition to or in place of the first function on the basis of the first page information, as well as second page information on a second webpage that is the transition destination. The crawling control unit 114 thus configured is able to repeatedly determine an inspection-requiring function on the basis of page information on multiple webpages.

In the present embodiment, the degrees of relatedness between the respective executable operations and the inspection-requiring function may be determined using various approaches. For example, a rule-based approach may be used. In this case, the degrees of relatedness may be determined on the basis of label names corresponding to operations (e.g., if a label name corresponding to an operation is "login," the degree of relatedness between the operation and the login function may be set to "100"; if a label name corresponding to an operation is "account," the degree of relatedness between the operation and the login function may be set to "50").

The degrees of relatedness may also be determined using a trained model generated by machine learning. For example, the crawling control unit 114 may be configured to input page information (e.g., HTML data) on webpages and information including combinations of executable operations and inspection-requiring functions into a trained model for determining the degrees of relatedness and to determine the degrees of relatedness on the basis of information that is outputted from the trained model and used to determine the degrees of relatedness (information including scores or the like indicating the degrees of relatedness). For example, such a trained model is generated through machine learning using a large amount of training data (e.g., page information (HTML data, etc.) on webpages, information on executable operations on each webpage, information on inspection-requiring functions related to the operations, etc.). In this case, input information to be inputted to the trained model may include the past operation history (information on operations performed before reaching the corresponding webpage). As seen above, the crawling control unit 114 is able to determine the degrees of relatedness using the trained model.

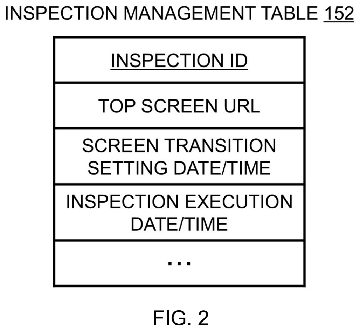

Next, a specific example as one aspect of the vulnerability inspection server 10 according to the present embodiment having these functions will be described. First, information managed by each table in this example will be described. FIG. 2 illustrates information managed by the inspection management table 152 in this example. The inspection management table 152 in this example manages information on specific inspections. Specifically, as shown, it manages information such as a "top screen URL" that is the URL of a top screen (top page) serving as the starting point of a specific inspection performed on a website to be inspected, a "screen transition setting date/time" that is the date and time of setting of screen transitions, and an "inspection execution date/time" that is the date and time of execution of the specific vulnerability inspection such that these pieces of information are associated with an "inspection ID" that identifies the specific inspection (case).

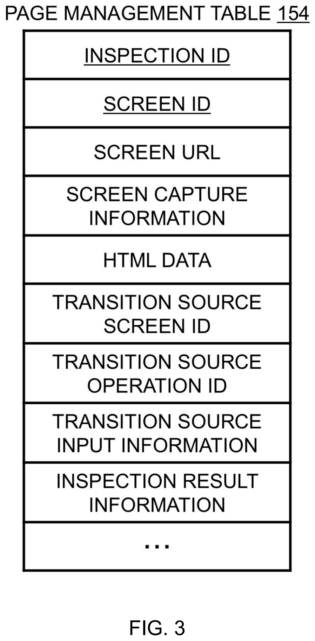

FIG. 3 illustrates information managed by the page management table 154 in this example. The page management table 154 in this example manages information on webpages (screens) included in a website to be inspected. Specifically, as shown, it manages information such as a "screen URL" that is the URL of a specific screen in a specific inspection, "screen capture information" that is information on the screen capture of the specific screen, "HTML data" of the specific screen, a "transition source screen ID" that identifies the transition source screen of the specific screen, a "transition source operation ID" that identifies an operation performed on the transition source screen of the specific screen (an operation performed when making a transition to the specific screen), "transition source input information" that is information on an input value inputted for an input item on the transition source screen, and "inspection result information" that is information on the inspection results of the specific screen such that these pieces of information are associated with a combination of an "inspection ID" that identifies the specific inspection and a "screen ID" that identifies the specific screen.

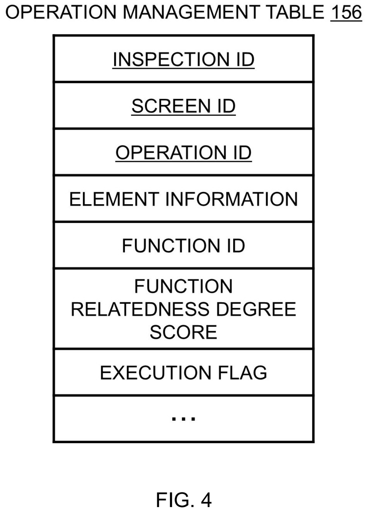

FIG. 4 illustrates information managed by the operation management table 156 in this example. In this example, the operation management table 156 manages information on an operation executed on each screen. Specifically, it manages information such as "element information" that is information (label name, etc.) on a screen element corresponding to an operation executed on a specific screen in a specific inspection, an "function ID" that identifies an inspection-requiring function associated with the specific operation, a "function relatedness degree score" that indicates the degree of relatedness between the specific operation and the inspection-requiring function, and an "execution flag" that indicates whether the specific operation has been executed such that these pieces of information are associated with a combination of an "inspection ID" that identifies the specific inspection, a "screen ID" that identifies the specific screen, and an "operation ID" that identifies the specific operation.

The information managed by the tables in this example has been described above. Next, processes performed by the vulnerability inspection server 10, screens outputted on the user terminal 30, and the like in this example will be described.

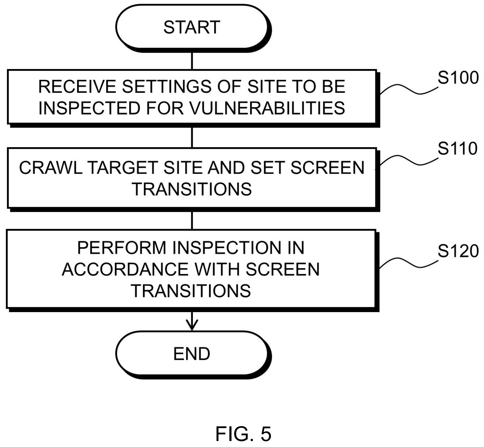

FIG. 5 is a flowchart illustrating a process that the vulnerability inspection server 10 performs when inspecting a website for vulnerabilities in this example. As shown, the server 10 first receives settings of a website to be inspected for vulnerabilities (step S100). The server 10 receives the settings through a screen outputted on the user terminal 30.

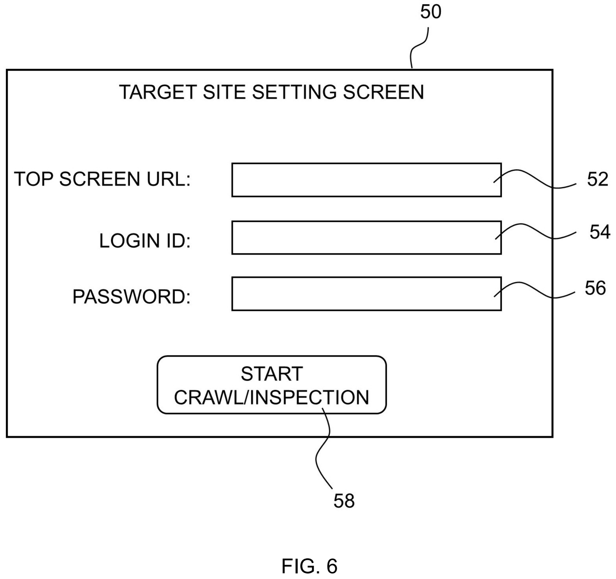

FIG. 6 illustrates a target site setting screen 50 that is outputted on the user terminal 30 and used to receive the settings of the website to be inspected. As shown, the screen 50 includes a URL input field 52 for inputting the URL of the top screen (top page) of the website to be inspected, a login ID input field 54 for inputting a login ID used to log in to the website, a password input field 56 for inputting a password used to log in to the website, and a continue button 58 provided with text "start crawling/inspection". As seen above, in this example, the URL of the top screen, the login ID, and the password are received as information on the settings of the website to be inspected.

The continue button 58 is an object for instructing the server 10 to crawl and inspect the website to be inspected. Referring back to the flowchart of FIG. 5, when the continue button 58 is selected, the server 10 then crawls the website to be inspected and sets screen transitions for an inspection (step S110).

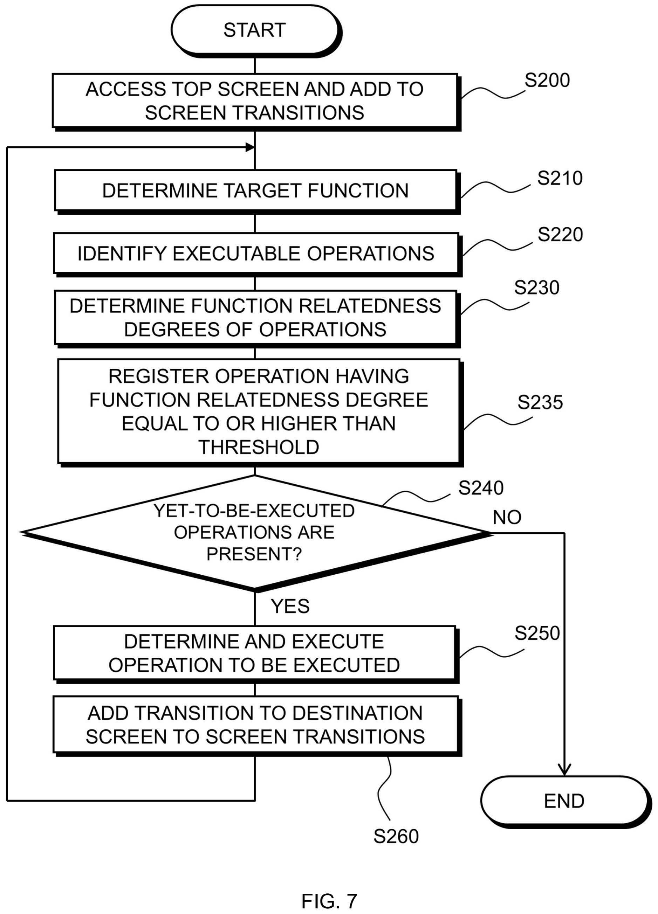

FIG. 7 is a flowchart illustrating a process that the server 10 performs when crawling the website. As shown, first, the server 10 accesses the top screen of the website to be inspected and adds the top screen to screen transitions (step S200). Specifically, the server 10 starts a browser and accesses the top screen specified by the URL inputted through the target site setting screen 50 (i.e., acquires the corresponding webpage). The server 10 then registers information on the top screen in the page management table 154 and, more specifically, sets the inspection ID, screen ID, screen URL, screen capture information, and HTML data therein.

The server 10 then determines a vulnerability inspection target function (inspection-requiring function) (step S210). In this example, the target function is determined using a trained model. Specifically, the server 10 inputs the HTML data of the corresponding screen (here, the top screen) to the trained model and determines, as a target function, a function having the highest of inspection-requiring possibility scores indicating the possibilities that predetermined multiple functions each require an inspection that are outputted from the trained model. Such a trained model is generated through machine learning using a large amount of training data (HTML data provided with data identifying an inspection-requiring function, etc.). The predetermined multiple functions are set by a vulnerability inspection service provider and include, for example, "new user registration," "login," "product purchase," "inquiry," and the like.

The server 10 then identifies executable operations (step S220). Specifically, it identifies one or more executable operations on the basis of the HTML data of the corresponding screen (here, the top screen). The executable operations are identified as clicks of screen elements (buttons, images, text, etc.) on which links, script, or the like are set.

The server 10 then determines function relatedness degree scores indicating the degrees of relatedness between the respective identified executable operations and the target function (step S230). Specifically, the function relatedness degree scores are acquired using a trained model. In this example, the trained model consists of a large language model and is configured to, when receiving the HTML data of the corresponding screen, as well as information instructing the large language model to present function relatedness degree scores indicating the degrees of relatedness between the respective executable operations and the target function, output the scores. Examples of such a large language model include GPT-4 provided by the U.S.-based OpenAI.

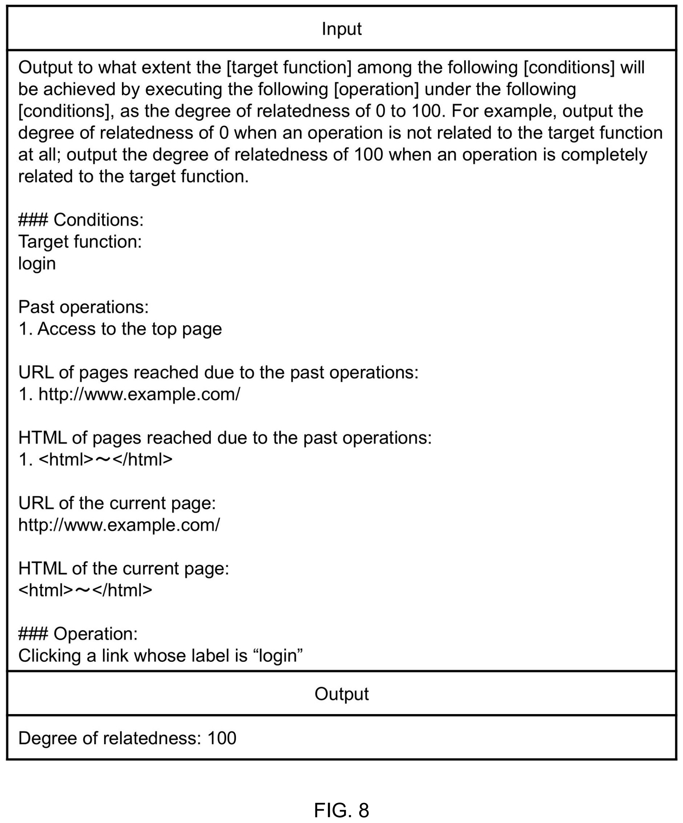

FIG. 8 shows an example of input information inputted to the large language model and output information outputted therefrom. Such input information is automatically generated by the server 10.

Referring back to the flowchart of FIG. 7, the server 10 then registers an operation having a function relatedness degree score equal to or higher than a threshold (step S235). Specifically, it sets the inspection ID, screen ID, operation ID, element information, function ID, and function relatedness degree score in the operation management table 156. Information (a label name, etc.) identifying a screen element to be clicked is set as the element information. As seen above, in this example, the operation having the function relatedness degree score equal to or higher than the threshold (i.e., having the high degree of relatedness to the target function) is registered in the operation management table 156 so as to be associated with the target function.

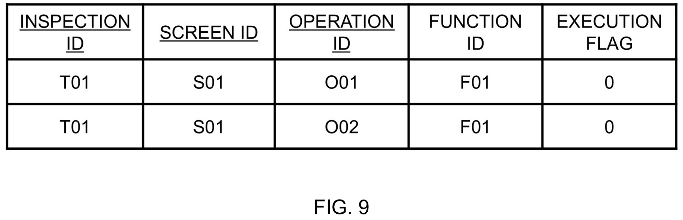

FIG. 9 shows an example of the contents of the operation management table 156 at this point. As shown, in the example in FIG. 9, two operations (with operation IDs "001" and "002") having the degrees of relatedness to the target function (function ID "F01") equal to or higher than the threshold among operations executable on a screen having a screen ID "S01" (the top screen) are registered so as to be associated with the target function.

Referring back to the flowchart of FIG. 7, if yet-to-be-executed operations are present among the registered operations (YES in step S240), the server 10 determines and executes an operation to be executed (step S250). Specifically, the server 10 determines, as an operation to be performed, an operation determined according to a specified rule (e.g., an operation having the highest function relatedness degree score) among the yet-to-be-executed registered operations (identified by referencing execution flags in the operation management table 156). If input items (e.g., input form elements) are present in the corresponding screen, the server 10 sets input values for the input items and then executes an operation. The input values are automatically set according to a specified rule.

The server 10 then adds a transition to a destination screen in response to the execution of the operation to the screen transitions (step S260). Specifically, the server 10 registers information on the destination screen in the page management table 154 and, more specifically, sets the inspection ID, screen ID, screen URL, screen capture information, HTML data, transition source screen ID, transition source operation ID, and transition source input information therein. A value identifying the operation executed immediately before the transition is set as the transition source operation ID. Combinations of the input items and the input values are set as the transition source input information.

If the destination screen is a screen that does not need to be added to the screen transitions, the server 10 does not have to add the destination screen to the screen transitions. For example, if the destination screen is a screen of a site outside the website to be inspected, a screen that overlaps a screen already included in the screen transitions (whether screens overlap each other is determined on the basis of, for example, the similarity therebetween), or the like, the server 10 determines that the destination screen is a screen that does not need to be added to the screen transitions.

The server 10 then returns to step S210 to set a target function for the destination screen, identifies executable operations (step S220), determines the function relatedness degree scores of the operations (step S230), and registers an operation having a function relatedness degree score equal to or higher than the threshold (step S235).

When determining function relatedness degree scores for the second and subsequent times, the server 10 determines the function relatedness degree scores of respective operations executable on the corresponding screen with respect to a target function determined on the basis of the HTML data of the corresponding screen (a target function set for the current screen), as well determines the function relatedness degree scores of the respective executable operations with respect to the target function registered in the operation management table 156 so as to be associated with the operation executed immediately before the transition (the target function having the high degree of relatedness to the operation executed immediately before the transition). In other words, if the two target functions are different, the server 10 determines two function relatedness degree scores of each executable operation with respect to the two target functions. If both the two function relatedness degree scores of an executable operation are equal to or higher than the threshold, the executable operation is registered so as to be associated with one target function selected according to a specified rule.

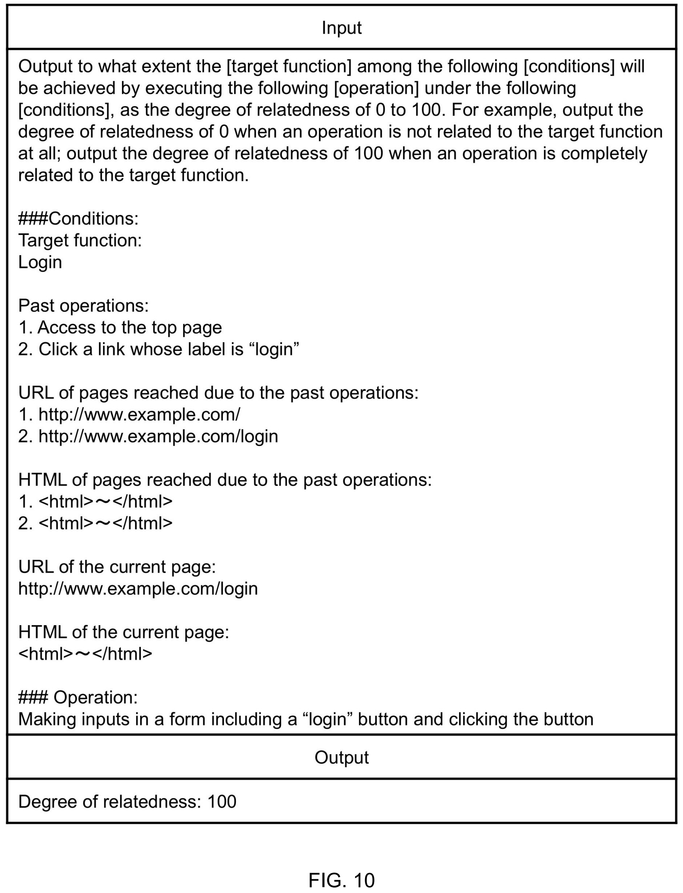

FIG. 10 shows an example of input information inputted to a large language model used to determine function relatedness degree scores for the second time and output information outputted therefrom. In this case, as shown, in the input information inputted to the large language model, information on operations executed immediately before a transition are set as past operations, and information on past screens (the top screen) are set as the URL and HTML of pages reached due to the past operations. These pieces of information are automatically generated by the server 10 on the basis of information managed in the page management table 154 and the operation management table 156.

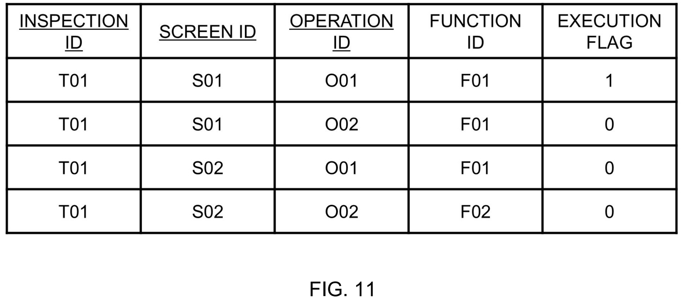

FIG. 11 shows an example of the contents of the operation management table 156 at this point. FIG. 11 shows that an operation having an operation ID "O01" has been executed on a screen having a screen ID "S01" (the top screen) (the execution flag is "1"); an operation having an operation ID "001" among operations executable on a destination screen having a screen ID "S02" is registered so as to be associated with a target function having a function ID "F01"; and an operation having an operation ID "O02" among the executable operations is registered so as to be associated with a target function having a function ID "F02" (a target function set for the destination screen).

Referring back to the flowchart of FIG. 7, the server 10 determines and executes, as an operation to be executed, an operation identified according to a specified rule from among the registered operations that have yet to be executed at that point (step S250) and newly adds a transition to a destination screen in response to the execution of the operation to the screen transitions (step S260). These processes are repeated until yet-to-be-executed registered operations are no longer present (NO in step S240).

Referring back to the flowchart of FIG. 5, when the screen transitions are set as seen above, the server 10 then inspects the website for vulnerabilities in accordance with the set screen transitions (step S120). Specifically, it launches the web browser, sequentially crawls the screens included in the screen transitions in accordance with the information managed in the page management table 154, and inspects each screen for predetermined vulnerability inspection items. Examples of the vulnerability inspection items include items defined in the OWASP Top 10. The inspection results are registered in the inspection result information in the page management table 154. Note that the server 10 may inspect each screen for the inspection items while crawling the website (i.e., while setting the screen transitions).

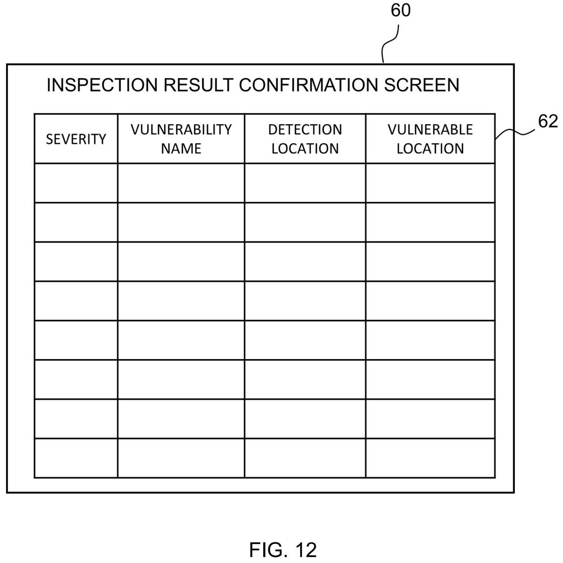

FIG. 12 illustrates an inspection result confirmation screen 60 that is displayed on the user terminal 30 and used to confirm inspection results. As shown, the screen 60 includes a list area 62 for listing the results of a vulnerability inspection. The results (the severity, vulnerability name, detection location, vulnerable location, etc.) of a vulnerability inspection of each screen are listed in the area 62. These pieces of information are managed in the inspection result information in the page management table 154.

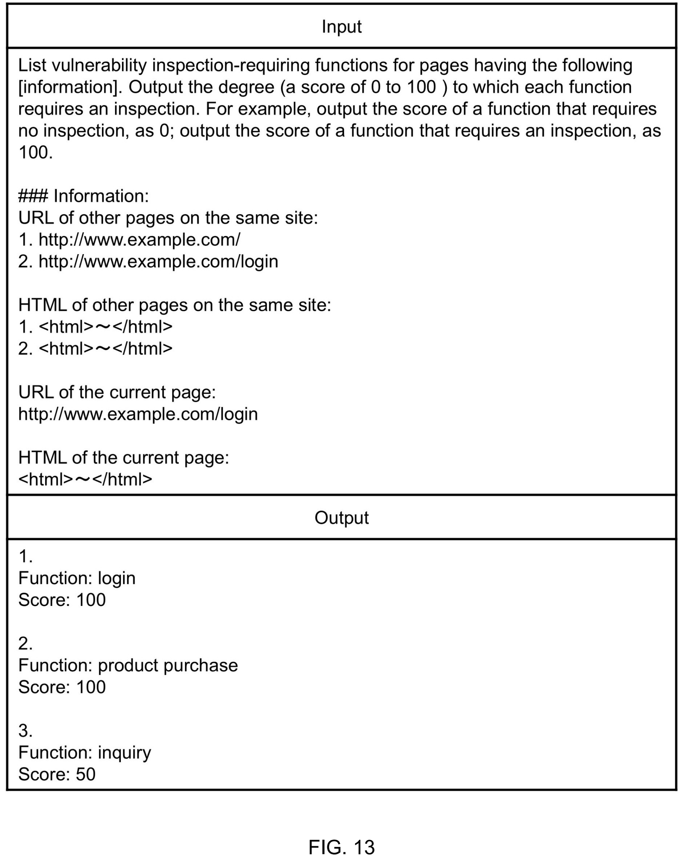

While, in the above example, the target function (inspection-requiring function) is set in the vulnerability inspection using the trained model configured to, when receiving the HTML data of the corresponding screen, output the inspection-requiring possibility scores of the functions, a target function may be set using a large language model. FIG. 13 shows an example of input information inputted to a large language model configured to set a target function and output information outputted therefrom. In this case, as shown, not only the HTML data of the current screen but also the HTML data of other screens (the transition source screen and the like) may be inputted as input information. A target function may be set using a rule-based approach.

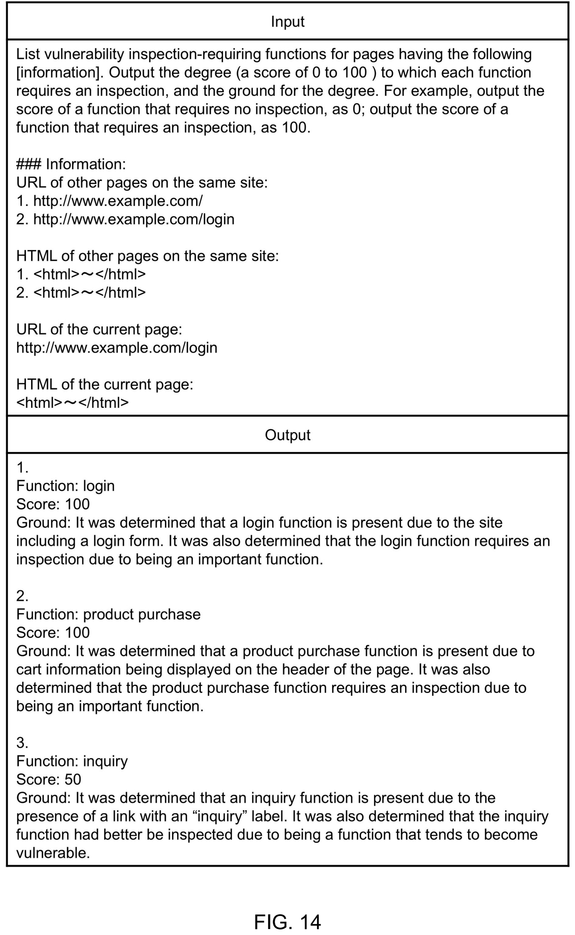

In the above example, not only function relatedness degree scores but also the grounds for the scores may be acquired using a large language model. FIG. 14 shows an example of input information inputted to such a large language model and output information outputted therefrom in this case. For example, the information on the grounds may be managed in the operation management table 156 and used to verify the validity of the scores and also used as a part of the operation history. The function relatedness degrees may be determined using a rule-based approach.

The vulnerability inspection server 10 according to the present embodiment described above, during the crawling of the website 22, determines the inspection-requiring function that requires an inspection for vulnerabilities, determines the degrees of relatedness between the respective multiple operations executable on each webpage and the inspection-requiring function, and executes the operation identified from among the executable operations on the basis of the degrees of relatedness. That is, the vulnerability inspection server 10 is able to execute the operation identified on the basis of the degrees of relatedness to the inspection-requiring function. This facilitates crawling of webpages corresponding to important functions. In other words, the vulnerability inspection server 10 suppresses missing of important functions during the vulnerability inspection of the website.

In another embodiment of the present invention, some or all of the functions of the vulnerability inspection server 10 according to the above embodiment may be performed by collaboration of the vulnerability inspection server 10 and user terminal 30 or by the user terminal 30.

The processes and procedures described in the present description may be performed by software, hardware, or any combination thereof other than those described explicitly. For example, the processes and procedures described in the present description may be performed by implementing logic corresponding to the processes and procedures in a medium such as an integrated circuit, volatile memory, non-volatile memory, or magnetic disk. The processes and procedures described in the present description may also be implemented as a computer program corresponding to those and performed by various types of computers.

Even when it is stated that the processes and procedures described in the present description are performed by a single apparatus, software, component, or module, those processes or procedures may be performed by multiple apparatuses, multiple types of software, multiple components, and/or multiple modules. The software and hardware components described in the present description may be implemented by integrating them into less components or by decomposing them into more components.

When the components of the invention are described in a singular or a plural form in the present description or even when the components are described without specifying a singular form or plural form, the components may be singular or plural unless the number of each component should be interpreted otherwise in the context.

## Claims

1. A system for a vulnerability inspection of a website, the vulnerability inspection involving crawling of the website, the system comprising one or more computer processors,
wherein the one or more computer processors perform actions comprising:
acquiring a first webpage included in the website;
determining an inspection-requiring function that requires an inspection for vulnerabilities, on the basis of first page information on the first webpage;
identifying a plurality of operations executable on the first webpage;
determining degrees of relatedness between the respective executable operations and the inspection-requiring function;
executing a first operation identified on the basis of the degrees of relatedness from among the executable operations; and
acquiring a second webpage in response to execution of the first operation.

2. The system of claim 1, wherein an executable operation having the high degree of relatedness among the executable operations is preferentially identified as the first operation.

3. The system of claim 1, wherein the determining the inspection-requiring function comprises inputting first input information including the first page information to a first trained model and determining the inspection-requiring function on the basis of first output information that is outputted from the first trained model and used to identify the inspection-requiring function.

4. The system of claim 3, wherein the first output information includes information identifying the inspection-requiring function.

5. The system of claim 3,
wherein the first output information includes possibility information indicating possibilities that a plurality of predetermined functions each require an inspection for vulnerabilities, and
wherein the determining the inspection-requiring function comprises preferentially determining, as the inspection-requiring function, a function having a high possibility that the function requires an inspection for vulnerabilities among the predetermined functions.

6. The system of claim 1, wherein the one or more computer processors further perform an action comprising determining the inspection-requiring function again on the basis of the first page information, as well as second page information on the second webpage.

7. The system of claim 1, wherein the determining the degrees of relatedness comprises inputting the first page information and second input information including combinations of the respective executable operations and the inspection-requiring function to a second trained model and determining the degrees of relatedness on the basis of second output information that is outputted from the second trained model and used to determine the degrees of relatedness.

8. The system of claim 7, wherein the second output information includes the degrees of relatedness.

9. The system of claim 7,
wherein the acquiring the first webpage comprises acquiring the first webpage in response to execution of a second operation, and
wherein the second input information further includes information identifying the second operation.

10. A method for a vulnerability inspection of a website, the vulnerability inspection involving crawling of the website, the method comprising:
acquiring a first webpage included in the website;
determining an inspection-requiring function that requires an inspection for vulnerabilities, on the basis of first page information on the first webpage;
identifying a plurality of operations executable on the first webpage;
determining degrees of relatedness between the respective executable operations and the inspection-requiring function;
executing a first operation identified on the basis of the degrees of relatedness from among the executable operations; and
acquiring a second webpage in response to execution of the first operation.

11. A program for a vulnerability inspection of a website, the vulnerability inspection involving crawling of the website, the program causing one or more computers to perform actions comprising:
acquiring a first webpage included in the website;
determining an inspection-requiring function that requires an inspection for vulnerabilities, on the basis of first page information on the first webpage;
identifying a plurality of operations executable on the first webpage;
determining degrees of relatedness between the respective executable operations and the inspection-requiring function;
executing a first operation identified on the basis of the degrees of relatedness from among the executable operations; and
acquiring a second webpage in response to execution of the first operation.
